(19) Europäisches Patentamt
European Patent Office
Office européen des brevets

(11) **EP 3 980 491 B1**

(12) **EUROPEAN PATENT SPECIFICATION**

(45) Date of publication and mention
of the grant of the patent:
**03.05.2023 Bulletin 2023/18**

(21) Application number: **20733147.1**

(22) Date of filing: **28.05.2020**

(51) International Patent Classification (IPC):
**C08L 23/08** (2006.01)       **C08J 5/18** (2006.01)

(52) Cooperative Patent Classification (CPC):
(C-Sets available)
**C08L 23/0815; C08J 5/18;** C08J 2323/08;
C08J 2423/06                                      (Cont.)

(86) International application number:
**PCT/US2020/034803**

(87) International publication number:
**WO 2020/251764 (17.12.2020 Gazette 2020/51)**

(54) **POLYETHYLENE BLEND**

POLYETHYLENMISCHUNG

MÉLANGE DE POLYÉTHYLÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.06.2019   US 201962859447 P**

(43) Date of publication of application:
**13.04.2022   Bulletin 2022/15**

(73) Proprietor: **Univation Technologies, LLC Houston, TX 77056 (US)**

(72) Inventors:
• **BORSE, Nitin**
**Lake Jackson, TX 77566 (US)**
• **CHANDAK, Swapnil B.**
**Houston, TX 77056 (US)**

(74) Representative: **Boult Wade Tennant LLP Salisbury Square House 8 Salisbury Square London EC4Y 8AP (GB)**

(56) References cited:
**EP-A2- 0 308 088          WO-A1-94/26816 WO-A1-2014/058659     US-A- 5 334 428 US-A1- 2005 003 175     US-B1- 6 649 698**

(52) Cooperative Patent Classification (CPC): (Cont.)

C-Sets
**C08L 23/0815, C08L 23/06**

C-Sets
**C08L 23/0815, C08L 23/06**

**Description**

FIELD

Polyethylene polymers, and related methods and articles, including stretch wrap films.

INTRODUCTION

Patent application publications and patents in or about the field include US 2003/0113496 A1; US 2003/0139530 A1; US 2007/0260016 A1; US 2008/0038533 A1; US 2012/0028017 A1; US 6,355,733 B1; and US 6,649,698 B1.

A stretch wrap film is typically composed of a linear low-density polyethylene (LLDPE) polymer. This elastic film is designed to be stretched and wrapped around object(s). When the wrapping is complete and the stretching force is released, the film spontaneously "recovers" its elasticity (i.e., spontaneously shrinks without being heated), thereby tightening its hold on the object(s). Common uses of stretch wrap films include securing pallets of goods and hermetically sealing containers of food. Stretch wrap films differ from shrink wrap films in that the latter are designed to be applied loosely around an object, and then heated to cause heat-shrinking.

SUMMARY

We are aware of problems with improving stretch wrap film performance. Blending a second resin such as a polypropylene (PP) or a low-density polyethylene (LDPE) into the LLDPE polymer often require high loading levels (e.g., 10 weight percent or more of the second resin) and/or may worsen stretch properties such as by decreasing stress at break. Adding additional film layers made from PP and/or LDPE may improve overall performance, but multilayer films add costs and manufacturing complexity.

Here is a polyethylene blend that has at least one improved stretch property that enhances its usefulness in both monolayer and multilayer stretch wrap film applications. The polyethylene blend consists essentially of from 99 to 97 weight percent (wt%) of a linear low-density polyethylene (LLDPE) component and from 1 to 3 wt% of a higher molecular weight high-density polyethylene polymer (HMW HDPE) component, based on the combined weight of the LLDPE and HMW HDPE components. Despite having just from 1 to 3 wt% of the HMW HDPE component, films made from the polyethylene blend surprisingly outperform a control film made from the LLDPE component alone and comparative films containing 5 wt% or higher loadings of the HMW HDPE component.

Also a method of making the polyethylene blend, a formulation comprising the polyethylene blend and at least one additive, a method of making a manufactured article from the polyethylene blend or formulation; the manufactured article made thereby, and use of the polyethylene blend or formulation for stretch wrapping object(s) in need thereof.

DETAILED DESCRIPTION

The polyethylene blend consists essentially of from 99 to 97 weight percent (wt%) of a linear low-density polyethylene (LLDPE) component and from 1 to 3 wt% of a higher molecular weight high-density polyethylene polymer (HMW HDPE) component, based on the combined weight of the LLDPE and HMW HDPE components. In some aspects the polyethylene blend consists essentially of from 98.4 to 97.6 wt% of the LLDPE component and from 1.6 to 2.4 wt% of the HMW HDPE component, all based on the combined weight of the LLDPE and HMW HDPE components.

The transitional phrases "consists essentially of" and "consisting essentially of" mean that the polyethylene blend, and any film layer made therefrom, contains no more than 3 wt% of the HMW HDPE component. In some aspects the transitional phrases further mean that the polyethylene blend, and any film layer made therefrom, is free of (i.e., does not contain) any one of polyolefins (i) to (xii): (i) a low-density polyethylene (LDPE); (ii) a medium-density polyethylene (MDPE); (iii) a high-density polyethylene (HDPE) that is not the HMW HDPE component; (iv) a polypropylene (PP); (v) both (i) and (ii); (vi) both (i) and (iii); (vii) both (i) and (iv); (viii) both (ii) and (iii); (ix) both (ii) and (iv); (x) both (iii) and (iv); (xi) any three of (i) to (iv); and (xii) each of (i) to (iv).

The proportion of the HMW HDPE component relative to the LLDPE component is controlled to produce the at least one improved stretch property. Surprisingly, blending just from 1 to 3 wt% of HMW HDPE into the LLDPE polymer brings about significant beneficial increases in stretch properties of films made from the resulting polyethylene blend.

To further produce the at least one improved stretch property, the density and melt rheology of the LLDPE and HMW HDPE components of the polyethylene blend may also be controlled. The LLDPE component may be further described by its melt index ($I_2$) and density and the HMW HDPE component may be further described by its flow index ($I_{21}$) and density. The LLDPE component of the polyethylene blend may be a poly(ethylene-co-1-alkene) copolymer and may have a melt index ($I_2$) from 0.5 to 1.5 gram per 10 minutes (g/10 min.) and a density from 0.915 to 0.921 gram per cubic centimeter (g/cm$^3$). The HMW HDPE component of the polyethylene blend may be a polyethylene homopolymer and may have a flow index ($I_{21}$) from 5 to 11 g/10 min. and a density from 0.944 to 0.954 g/cm$^3$. The melt index ($I_2$) is measured according to ASTM D1238-13 (190° C., 2.16 kg), the flow index ($I_{21}$) is measured according to ASTM D1238-13 (190° C., 21.6 kg), and the density is measured according to ASTM D792-13 (Method B, 2-propanol).

The polyethylene blend has the at least one improved stretch property that make it particularly useful for stretch wrap film applications. The stretch wrap film may be a blown stretch wrap film (blown film) or a cast stretch wrap film (cast film). The improvement in stretch property is measured on a blown test film or cast test film of the polyethylene blend according to the respective methods described later. The blown test film may be used to measure at least one improved (increased) stretch property of any one of features (a) to (d): (a) a break stress in the cross-direction (CD) of greater than 36.0 megapascals (MPa, > 5,221 pounds per square inch (psi)); (b) a strain at break in the cross-direction (CD) of greater than 575 percent (%); (c) a break stress in the machine direction (MD) of greater than 44.0 MPa (> 6,381 psi); and (d) a strain at break in the machine direction (MD) of greater than 575%. The greater the break stress or strain at break, the more robust is the film, i.e., the greater the load retention in stretch wrap applications and the lower the stress relaxation after wrapping. In practice, this means after stretching and wrapping, the film maintains a greater load force without breaking. Stretch break properties (a) to (d) may be measured according to the Tensile Test Method described later using a 0.051-millimeter (mm, 2 mils gauge) thickness blown test film prepared according to the Blown Film Preparation Method described later and using the relevant test methods described later and may relative to an unblended control LLDPE component that is free of the HMW HDPE component or to a polyethylene blend of the LLDPE and HMW HDPE components that is outside the wt% range.

The cast test film may be used to measure an improved (increased) stretch property of an increase in stretch force in Newtons measured at 200 percent (%) stretch that is at least 105% of a stretch force in Newtons measured at 200% of an unblended control LLDPE component that is the same as the LLDPE component of the polyethylene blend but is free of the HMW HDPE component. The greater the increase in stretch force, the greater the load retention in stretch wrap applications and the lower the stress relaxation after wrapping. In practice, this means after stretching and wrapping, the film maintains a greater load force without breaking. The stretch force may be measured according to the Highlight Film Test Method described later using a 0.0127 mm (0.5 mil gauge) thickness cast test film prepared according to the Cast Film Preparation Method described later.

The polyethylene blend is useful for making manufactured articles, which are not limited to films. The films include stretch wrap films, cling films, stretch films, sealing films, oriented films, food packaging, heavy-duty grocery bags, grocery sacks, medical packaging, industrial liners, and membranes. The polyethylene blend, and manufactured articles made therefrom have the improved (increased) stretch break properties described earlier. This unique combination of properties enables use of the manufactured articles, including stretch wrap films, for wrapping objects in need of protection.

The polyethylene blend may be made by melt-blending the chosen HMW HDPE resin and the chosen LLDPE resin together by any suitable means such as a single-screw or twin-screw extruder or a melt mixer. If desired one or more additives may be included in the melt-blend. For example, the one or more additives may be ingredients useful in film applications such as different polyethylene polymer; a polypropylene polymer; an antioxidant; a catalyst neutralizer; a colorant or dye; a stabilizer for stabilizing the formulation against effects of ultraviolet light (UV stabilizer); a processing aid; or a nucleator for promoting polymer crystallization (e.g., calcium (1R,2S)-*cis*-cyclohexane-1,2-dicarboxylate (1:1); calcium stearate (1:2), or zinc stearate). The polyethylene blend may be characterized as a "post-reactor blend" An example of the melt-blending process comprises mixing melt-mixing pellets, granules, powder, or a combination thereof of the HMW HDPE component with pellets, granules, powder, or a combination thereof of the LLDPE component together in an extruder to give the polyethylene blend comprising a melt of the LLDPE and HMW HDPE components. Alternatively, the polyethylene blend may be made by solids blending the pellets, granules, powder, or a combination thereof of the HMW HDPE component with pellets, granules, powder, or a combination thereof of the LLDPE component together without melting same so as to give the polyethylene blend comprising blended solids. The blended solids may be melted to give the polyethylene blend comprising a melt of the LLDPE and HMW HDPE components. The melt of the polyethylene blend may be processed (e.g., blown or cast) into a solid film of the polyethylene blend. The polyethylene blend may be made in any form, including films and as finely-divided solid (solid particles) comprising a powder, granules, pellets, or a combination of any two or more thereof. The polyethylene blend may be free of a high-density polyethylene other than the HMW HDPE component and may be free of a linear low-density polyethylene other than the LLDPE component.

The desired density and melt rheology properties of the LLDPE and HMW HDPE components (e.g., the melt index ($I_2$) and density of the LLDPE component and the flow index ($I_{21}$) and density of the HMW HDPE component) may be produced by choosing commercially available LLDPE and HMW HDPE resins having the desired respective properties.

Alternatively, the desired density and melt rheology properties of the LLDPE and HMW HDPE components may be achieved by separately making suitable LLDPE and HMW HDPE resins. Suitable LLDPE and HMW HDPE resins may be separately made using independently suitable polymerization catalysts and process conditions. In some aspects each such resin is separately made under independent gas phase polymerization processes using different catalyst systems and process conditions. The processes independently polymerize ethylene and, optionally, a 1-alkene (e.g., 1-hexene). The LLDPE component may be made by a metallocene-type catalyst system and the HMW HDPE component may be made by a chromium-based catalyst system. The metallocene-type catalyst system used to make the LLDPE component may be made by contacting bis(n-propylcyclopentadienyl)hafnium $X_2$ complex or bis(1-methyl-3-butylcyclopentadienyl)zirconium $X_2$ complex, wherein each X independently is Cl, methyl, 2,2-dimethylpropyl, -$CH_2Si(CH_3)_3$, or benzyl, with an activator. The chromium-based catalyst system used to make the HMW HDPE component may be a reduced chromium oxide catalyst system, as described herein. The reduced chromium oxide catalyst system may be ACCLAIM™ K-100 advanced chrome catalyst system (described herein), available from Univation Technologies LLC, Houston, Texas, USA. The process conditions independently may comprise bed temperature, ethylene partial pressure, the molar ratio of molecular hydrogen to ethylene ($H_2/C_2$ molar ratio), and, if relevant, the molar ratio of 1-alkene (if any) to ethylene ($C_x/C_2$ molar ratio). Useful process conditions are detailed later.

The LLDPE component may be characterized as a polyethylene homopolymer with a density from 0.91 to 0.93 $g/cm^3$, measured according to ASTM D792-13 (Method B, 2-propanol).

The HMW HDPE component may be characterized as a poly(ethylene-co-1-alkene) copolymer having a density from 0.94 to 0.97 $g/cm^3$, measured according to ASTM D792-13 (Method B, 2-propanol), and a weight-average molecular weight (Mw) from 300,000 to 500,000 grams per mole (g/mol), alternatively from 301,000 to 399,000 g/mol, alternatively from 401,000 to 499,000 g/mol, alternatively from 351,000 to 449,000 g/mol, measured by gel permeation chromatography (GPC) according to the GPD Test Method described later.

Additional inventive aspects follow; some are numbered for easy cross-referencing.

Aspect 1. A polyethylene blend consisting essentially of from 99 to 97 wt% of the linear low-density polyethylene (LLDPE) component and from 1 to 3 wt% of the higher molecular weight high-density polyethylene polymer (HMW HDPE) component, based on the combined weight of the LLDPE component and the HMW HDPE component. In some aspects the polyethylene blend consists essentially of from 98.4 to 97.6 wt% of the LLDPE component and from 1.6 to 2.4 wt% of the HMW HDPE component.

Aspect 2. The polyethylene blend of aspect 1 having at least one improved stretch property characterized by any one of features (a) to (d): (a) a break stress in the cross-direction (CD) of greater than 36.0 megapascals (MPa, > 5,221 pounds per square inch (psi)); (b) a strain or elongation at break in the cross-direction (CD) of greater than 571 percent (%), alternatively at least 574%; (c) a break stress in the machine direction (MD) of greater than 44.0 MPa (> 6,381 psi); and (d) a strain at break in the machine direction (MD) of greater than 531%, alternatively at least 575%. The polyethylene blend may be further characterized by at least one improved stretch property characterized by any one of features (e) to (j): (e) both (a) and (b); (f) both (a) and (c); (g) both (b) and (d); (h) both (c) and (d); (i) any three of (a) to (d); and (j) each of features (a) to (d). The particular combination of improved (increased) stretch break properties may vary depending upon the particular formulation of the polyethylene blend and the particular control or non-inventive blend to which it is compared. Each of the LLDPE component and HMW HDPE component independently may be a polyethylene homopolymer or a poly(ethylene-co-1-alkene) copolymer. In some aspects each of the LLDPE and HMW HDPE components independently is a poly(ethylene-co-1-alkene) copolymer. The poly(ethylene-co-1-alkene) copolymer may be a poly(ethylene-co-1-butene) copolymer, a poly(ethylene-co-1-hexene) copolymer, or a poly(ethylene-co-1-octene) copolymer. In some aspects each of the LLDPE and HMW HDPE components independently is a poly(ethylene-co-1-hexene) copolymer.

Aspect 3. The polyethylene blend of aspect 1 or 2 wherein the LLDPE component is characterized by any one of features (i-a) to (iii-a): (i-a) being a poly(ethylene-co-1-alkene) copolymer; (ii-a) having a melt index ($I_2$) from 0.5 to 4.5 gram per 10 minutes (g/10 min.), alternatively from 0.6 to 1.4 g/10 min., alternatively from 0.8 to 1.2 g/10 min., alternatively from 0.9 to 1.1 g/10 min., alternatively from 2.0 to 4.5 g/10 min., alternatively from 2.5 to 3.4 g/10 min., alternatively 2.9 to 3.1 g/10 min., measured according to ASTM D1238-13 (190° C., 2.16 kg); and (iii-a) having a density from 0.915 to 0.927 gram per cubic centimeter ($g/cm^3$), alternatively from 0.915 to 0.922 $g/cm^3$, alternatively from 0.917 to 0.921 $g/cm^3$, measured according to ASTM D792-13 (Method B, 2-propanol); and wherein the HMW HDPE component is characterized by any one of features (i-b) to (iii-b): (i-b) being a poly(ethylene-co-1-alkene) copolymer; (ii-b) having a flow index ($I_{21}$) from 5 to 14 g/10 min., alternatively from 5 to 11 g/10 min., alternatively from 7 to 12 g/10 min., alternatively from 7 to 9 g/10 min., alternatively from 8.0 to 10.0 g/10 min., alternatively from 8.0 to 8.4 g/10 min., measured according to ASTM D1238-13 (190° C., 21.6 kg); and (iii-b) having a density from 0.944 to 0.956 $g/cm^3$, alternatively from 0.944 to 0.954 $g/cm^3$, alternatively from 0.947 to 0.951 $g/cm^3$, alternatively from 0.948 to 0.950 $g/cm^3$, measured according to ASTM D792-13 (Method B, 2-propanol). The LLDPE component may be further characterized by any one of features (iv-a) to (vii-a): (iv-a) both (i-a) and (ii-a); (v-a) both (i-a) and (iii-a); (vi-a) both (ii-a) and (iii-a); and (vii-a) each of (i-a) to (iii-a). The HMW HDPE component may be further characterized by any one of features (iv-b) to (vii-b): (iv-b) both (i-b) and (ii-b); (v-b) both (i-b) and (iii-b); (vi-b) both (ii-b) and (iii-b); and (vii-b) each of (i) to (iii). In the polyethylene blend used to make the blown film, the LLDPE component may have the melt index ($I_2$) from 0.5 to 1.5 g/10 min., alternatively from 0.6 to 1.4 g/10 min., alternatively from 0.8 to 1.2 g/10 min., alternatively from 0.9 to 1.1 g/10 min., measured according to ASTM D1238-13 (190° C., 2.16 kg). In the polyethylene blend used to make the cast film, the LLDPE component may have the melt index ($I_2$) from 2.0 to 4.5 g/10 min., alternatively from 2.5 to 3.4 g/10 min., alternatively 2.9 to 3.1 g/10 min., measured according to ASTM D1238-13 (190° C., 2.16 kg).

Aspect 4. The polyethylene blend of any one of aspects 1 to 3 wherein the LLDPE component is 98 wt% of the total weight of the LLDPE and HMW HDPE components and either the LLDPE component is a poly(ethylene-co-1-hexene) copolymer having a melt index ($I_2$) of 1.0 g/10 min. and a density of 0.918 $g/cm^3$ or 0.920 $g/cm^3$ or the LLDPE component is a poly(ethylene-co-1-hexene) copolymer having a melt index ($I_2$) of 3.0 g/10 min. and a density of 0.917 $g/cm^3$; and wherein the HMW HDPE component is 2 wt% of the total weight of the LLDPE and HMW HDPE components and either the HMW HDPE component is a poly(ethylene-co-1-hexene) copolymer having a flow index ($I_{21}$) of 8.2 g/10 min. and a density of 0.949 $g/cm^3$ or the HMW HDPE component is a poly(ethylene-co-1-hexene) copolymer having a flow index ($I_{21}$) of 11 g/10 min. and a density of 0.948 $g/cm^3$.

Aspect 5. The polyethylene blend of any one of aspects 1 to 4 wherein the LLDPE component is made by a metallocene-type catalyst system made by contacting bis(n-propylcyclopentadienyl)hafnium $X_2$ complex or bis(1-methyl-3-butylcyclopentadienyl)zirconium $X_2$ complex, wherein each X independently is Cl, methyl, 2,2-dimethylpropyl, $-CH_2Si(CH_3)_3$, or benzyl, with an activator; and wherein the HMW HDPE component is made by a reduced chromium oxide catalyst system.

Aspect 6. A method of making the polyethylene blend of any one of aspects 1 to 5, the method comprising separately polymerizing ethylene and, optionally, a 1-alkene with a metallocene-type catalyst system made by contacting bis(n-propylcyclopentadienyl)hafnium $X_2$ complex or bis(1-methyl-3-butylcyclopentadienyl)zirconium $X_2$ complex, wherein each X independently is Cl, methyl, 2,2-dimethylpropyl, $-CH_2Si(CH_3)_3$, or benzyl, with an activator to give the LLDPE component; separately polymerizing ethylene with a reduced chromium oxide catalyst system to give the HMW HDPE component; and melt-blending the LLDPE and HMW HDPE components together to yield the polyethylene blend.

Aspect 7. A formulation comprising the polyethylene blend of any one of aspects 1 to 5 and at least one additive that is different than the HMW HDPE component and LLDPE component. The at least one additive may be an antioxidant (e.g., Antioxidant 1 and/or 2 described later); a catalyst neutralizer (i.e., metal deactivator, e.g., Catalyst Neutralizer 1 described later); an inorganic filler (e.g., hydrophobic fumed silica, which is made by surface treating a hydrophilic fumed silica with a hydrophobic agent such as dimethyldichlorosilane); a colorant (e.g., carbon black or titanium dioxide); a stabilizer for stabilizing the formulation against effects of ultraviolet light (UV stabilizer), such as a hindered amine stabilizer (HAS); a processing aid; a nucleator for promoting polymer crystallization (e.g., calcium (1R,2S)-*cis*-cyclohexane-1,2-dicarboxylate (1:1); calcium stearate (1:2), or zinc stearate); a slip agent (e.g., erucamide); and a flame retardant. The formulation may be made by melt-blending together the polyethylene blend of any one of aspects 1 to 5 and the at least one additive. The at least one additive may not negative (i.e., does not neutralize or render ineffective) the aforementioned meanings of the transitional phrases "consists essentially of" and "consisting essentially of".

Aspect 8. A manufactured article comprising the polyethylene blend of any one of aspects 1 to 5 or the formulation of aspect 7.

Aspect 9. A stretch wrap film comprising the polyethylene blend of any one of aspects 1 to 5 or the formulation of aspect 7. The stretch wrap film may be a cast stretch wrap film made by a film casting method or may be a blown stretch wrap film made by film blowing method. Such methods are generally well known. In some aspects the stretch wrap film is a monolayer film and not in contact with other layers. In other aspects the stretch wrap film is a multilayer film that consists essentially of two or more film layers, each independently made from the polyethylene blend. In still other aspects the stretch wrap film is a multilayer film that comprises at least one layer made from the polyethylene blend and at least one layer made from a LLDPE polymer alone or a LLDPE-PP resin blend, wherein PP is polypropylene. The inventive film may have a thickness from 5 micrometer ($\mu$m) to 3 millimeters (mm), alternatively from 10 $\mu$m to 1 mm.

Aspect 10. A method of wrapping an object in need of being wrapped, the method comprising applying a stretching force to the stretch wrap film of claim 9 to give a stretched film, tightly wrapping the object with the stretched film, and releasing the stretching force, thereby allowing elasticity of the stretched film to at least recover to yield a package comprising the object and a film tightly wrapped therearound. The stretching force may be at least 10 Newtons (N), alternatively at least 50 N, alternatively at least 60 N; and at most 100 N, alternatively at most 75 N.

The LLDPE component of the polyethylene blend may be made using the metallocene-type catalyst system made by contacting the bis(n-propylcyclopentadienyl)hafnium $X_2$ complex or bis(1-methyl-3-butylcyclopentadienyl)zir-conium $X_2$ complex with an activator. The activator may comprise a methylaluminoxane (MAO). The LLDPE component, prior to mixing with the HMW HDPE component, may be characterized as being free of a polyethylene polymer made with any one of catalysts (i) to (v): (i) a Ziegler-Natta catalyst; (ii) a chromium-based catalyst; (iii) a non-metallocene single-site catalyst, such as a bis((alkyl-substituted phenylamido)ethyl)amine $MX_2$; (iv) a zirconocene or titanocene catalyst; and (v) a hafnocene catalyst that is not made from a bis(n-propylcyclopentadienyl)hafnium $X_2$ complex or a zirconocene catalyst that is not made from bis(1-methyl-3-butylcyclopentadienyl)zirconium $X_2$ complex. The LLDPE component, prior to mixing with the HMW HDPE component, may be further characterized as being free of a polyethylene polymer made with any one of catalysts (vi) to (xiii): (vi) both (i) and (ii); (vii) both (i) and (iii); (viii) both (i) and (iv); (ix) both (i) and (v); (x) both (ii) and (iii); (xi) both (ii) and (iv); (xii) both (ii) and (v); (xiii) each of (i) to (v).

The HMW HDPE component of the polyethylene blend may be made using the reduced chromium oxide catalyst system. The HMW HDPE component, prior to mixing with the LLDPE component, may be characterized as being free of a polyethylene polymer made with any one of catalysts (i) to (iv): (i) a Ziegler-Natta catalyst; (ii) an unreduced chromium-based catalyst; (iii) a non-metallocene single-site catalyst, such as a bis((alkyl-substituted phenylamido)ethyl)amine $MX_2$; and (iv) a hafnocene, zirconocene, or titanocene catalyst. The HMW HDPE component, prior to mixing with the LLDPE component, may be further characterized as being free of a polyethylene polymer made with any one of catalysts (v) to (x): (v) both (i) and (ii); (vi) both (i) and (iii); (vii) both (i) and (iv); (viii) both (ii) and (iii); (ix) both (ii) and (iv); (x) each of (i) to (iv).

The 1-alkene used to make the poly(ethylene-co-1-alkene) copolymer embodiments of the HMW HDPE component may be a $(C_4-C_8)$alpha-olefin, or a combination of any two or more $(C_4-C_8)$alpha-olefins. Each $(C_4-C_8)$alpha-olefin independently may be 1-butene, 1-pentene, 1-hexene, 4-methyl-1-pentene, 1-heptene, or 1-octene; alternatively 1-butene, 1-hexene, or 1-octene; alternatively 1-butene or 1-hexene; alternatively 1-hexene or 1-octene; alternatively 1-butene; alternatively 1-hexene; alternatively 1-octene; alternatively a combination of 1-butene and 1-hexene; alternatively a combination of 1-hexene and 1-octene. The 1-alkene may be 1-hexene and the HMW HDPE component may be a poly(ethylene-co-1-hexene) composition. When the 1-alkene is a combination of two $(C_4-C_8)$alpha-olefins, the HMW HDPE component is a poly(ethylene-co-1-alkene) terpolymer.

Embodiments of the formulation may comprise a blend of the polyethylene blend and a different polyethylene homopolymer or a different ethylene/alpha-olefin composition. The alphaolefin used to make the different ethylene/alpha-olefin composition may be a $(C_3-C_{20})$alphaolefin, alternatively a $(C_4-C_8)$alpha-olefin; alternatively 1-butene, 1-hexene, or 1-octene; alternatively 1-butene; alternatively 1-hexene; alternatively 1-octene.

The gas phase polymerization (GPP) reactor may be a fluidized-bed gas phase polymerization (FB-GPP) reactor and the effective polymerization conditions may comprise conditions (a) to (e): (a) the FB-GPP reactor having a fluidized resin bed at a bed temperature from 80 to 110 degrees Celsius (° C.), alternatively from 100 to 108° C., alternatively from 104 to 106° C.; (b) the FB-GPP reactor receiving feeds of respective independently controlled amounts of ethylene, optionally a 1-alkene characterized by a 1-alkene-to-ethylene $(C_x/C_2)$ molar ratio, the polymerization catalyst system (e.g., the metallocene-type catalyst system or the reduced chromium oxide catalyst system, but not both), optionally hydrogen gas ($H_2$) characterized by a hydrogen-to-ethylene ($H_2/C_2$) molar ratio, and optionally an induced condensing agent (ICA) comprising a $(C_5-C_{-10})$alkane(s), e.g., isopentane; wherein the $(C_6/C_2)$ molar ratio is from 0.001 to 0.8, alternatively from 0.005 to 0.10; wherein when $H_2$ is fed, the $H_2/C_2$ molar ratio is from 0.0001 to 2.0, alternatively from 0.001 to 0.050; and wherein when the ICA is fed, the concentration of ICA in the reactor is from 1 to 20 mole percent (mol%), alternatively from 2 to 10 mol%, based on total moles of ethylene, any 1-alkene, and ICA in the reactor. The average residence time of the polyethylene blend in the reactor may be from 2 to 5 hours, alternatively from 2.5 to 4.5 hours.

In an illustrative pilot plant process for making the polyethylene blend, a fluidized bed, gas-phase polymerization reactor ("FB-GPP reactor") having a reaction zone dimensioned as 304.8 mm (twelve inch) internal diameter and a 2.4384 meter (8 feet) in straight-side height and containing a fluidized bed of granules of the polyethylene blend. Configure the FB-GPP reactor with a recycle gas line for flowing a recycle gas stream. Fit the FB-GPP reactor with gas feed inlets and polymer product outlet. Introduce gaseous feed streams of ethylene and hydrogen together with any 1-alkene comonomer (e.g., 1-hexene) below the FB-GPP reactor bed into the recycle gas line. Measure the $(C_5-C_{20})$alkane(s) total concentration in the gas/vapor effluent by sampling the gas/vapor effluent in the recycle gas line. Return the gas/vapor effluent (other than a small portion removed for sampling) to the FB-GPP reactor via the recycle gas line.

Polymerization operating conditions are any variable or combination of variables that may affect a polymerization reaction in the GPP reactor or a composition or property of a polyethylene made thereby. The variables may include reactor design and size, catalyst composition and amount; reactant composition and amount; molar ratio of two different reactants; presence or absence of feed gases such as $H_2$ and/or $O_2$, molar ratio of feed gases versus reactants, absence or concentration of interfering materials (e.g., $H_2O$), average polymer residence time in the reactor, partial pressures of constituents, feed rates of monomers, reactor bed temperature (e.g., fluidized bed temperature), nature or sequence of process steps, time periods for transitioning between steps. Variables other than that/those being described or changed by the method or use may be kept constant.

In operating the method, control individual flow rates of ethylene ("$C_2$"), any 1-alkene ("$C_x$", e.g., 1-hexene or "$C_6$" or "$C_x$" wherein x is 6), and any hydrogen ("$H_2$") to maintain a fixed comonomer to ethylene monomer gas molar ratio ($C_x/C_2$, e.g., $C_6/C_2$) equal to a described value, a constant hydrogen to ethylene gas molar ratio ("$H_2/C_2$") equal to a described value, and a constant ethylene ("$C_2$") partial pressure equal to a described value (e.g., 1,000 kPa). Measure concentrations of gases by an in-line gas chromatograph to understand and maintain composition in the recycle gas stream. Maintain a reacting bed of growing polymer particles in a fluidized state by continuously flowing a make-up feed and recycle gas through the reaction zone. Use a superficial gas velocity of 0.49 to 0.67 meter per second (m/sec) (1.6 to 2.2 feet per second (ft/sec)). Operate the FB-GPP reactor at a total pressure of about 2344 to about 2413 kilopascals (kPa) (about 340 to about 350 pounds per square inch-gauge (psig)) and at a described reactor bed temperature RBT. Maintain the fluidized bed at a constant height by withdrawing a portion of the bed at a rate equal to the rate of production of particulate form of the polyethylene blend, which production rate may be from 10 to 20 kilograms per hour (kg/hr), alternatively 13 to 18 kg/hr. Remove the produced polyethylene blend semi-continuously via a series of valves into a fixed volume chamber, and purge the removed composition with a stream of humidified nitrogen ($N_2$) gas to remove entrained hydrocarbons and deactivate any trace quantities of residual catalysts.

Each polymerization catalyst system may be fed into its respective polymerization reactor in "dry mode" or "wet mode". The dry mode is a dry powder or granules. The wet mode is a suspension in an inert liquid such as mineral oil or the ($C_5$-$C_{20}$)alkane(s).

In some aspects the LLDPE component of the polyethylene blend is separately made by contacting the metallocene-type catalyst system *in situ* in the GPP reactor in the presence of ethylene and any olefin comonomer (e.g., any 1-alkene) and growing polymer chains. These embodiments may be referred to herein as *in situ*-contacting embodiments. In other aspects the bis(n-propylcyclopentadienyl)hafnium $X_2$ complex or the bis(1-methyl-3-butylcyclopentadienyl)zirconium $X_2$ complex and activator are pre-mixed together for a period of time to make an activated metallocene-type catalyst system, which is then injected into the GPP reactor, where it contacts the olefin monomer and growing polymer chains. These latter embodiments are referred to herein as pre-contacting embodiments. The pre-mixing period of time of the pre-contacting embodiments may be from 1 second to 10 minutes.

An induced condensing agent (ICA) may be independently used or not used in each polymerization reaction used to separately make the LLDPE component or the HMW HDPE component. The ICA may be fed separately into the FB-GPP reactor or as part of a mixture also containing the respective catalyst system. The ICA may be a ($C_{11}$-$C_{20}$)alkane, alternatively a ($C_5$-$C_{10}$)alkane, alternatively a ($C_5$)alkane, e.g., pentane or 2-methylbutane; a hexane; a heptane; an octane; a nonane; a decane; or a combination of any two or more thereof. The aspects of the polymerization method that use the ICA may be referred to as being an induced condensing mode operation (ICMO). ICMO is described in US 4,453,399; US 4,588,790; US 4,994,534; US 5,352,749; US 5,462,999; and US 6,489,408. The concentration of ICA in the reactor is measured indirectly as total concentration of vented ICA in recycle line using gas chromatography by calibrating peak area percent to mole percent (mol%) with a gas mixture standard of known concentrations of ad rem gas phase components.

The method may use a gas-phase polymerization (GPP) reactor, such as a stirred-bed gas phase polymerization reactor (SB-GPP reactor) or a fluidized-bed gas-phase polymerization reactor (FB-GPP reactor), to separately make the LLDPE and HMW HDPE components of the polyethylene blend. Such gas phase polymerization reactors and methods are generally well-known in the art. For example, the FB-GPP reactor/method may be as described in US 3,709,853; US 4,003,712; US 4,011,382; US 4,302,566; US 4,543,399; US 4,882,400; US 5,352,749; US 5,541,270; EP-A-0 802 202; and Belgian Patent No. 839,380. These SB-GPP and FB-GPP polymerization reactors and processes either mechanically agitate or fluidize by continuous flow of gaseous monomer and diluent the polymerization medium inside the reactor, respectively. Other useful reactors/processes contemplated include series or multistage polymerization processes such as described in US 5,627,242; US 5,665,818; US 5,677,375; EP-A-0 794 200; EP-B1-0 649 992; EP-A-0 802 202; and EP-B-634421.

The method may use a pilot scale fluidized bed gas phase polymerization reactor (Pilot Reactor) that comprises a reactor vessel containing a fluidized bed of a powder of the LLDPE or HMW HDPE component, and a distributor plate disposed above a bottom head, and defining a bottom gas inlet, and having an expanded section, or cyclone system, at the top of the reactor vessel to decrease amount of resin fines that may escape from the fluidized bed. The expanded section defines a gas outlet. The Pilot Reactor further comprises a compressor blower of sufficient power to continuously cycle or loop gas around from out of the gas outlet in the expanded section in the top of the reactor vessel down to and into the bottom gas inlet of the Pilot Reactor and through the distributor plate and fluidized bed. The Pilot Reactor further comprises a cooling system to remove heat of polymerization and maintain the fluidized bed at a target temperature. Compositions of gases such as ethylene, optionally 1-alkene (e.g., 1-hexene), and hydrogen being fed into the Pilot Reactor are monitored by an in-line gas chromatograph in the cycle loop in order to maintain specific concentrations thereof that define and enable control of polymer properties. The relevant catalyst system may be fed as a slurry or dry powder into the Pilot Reactor from high pressure devices, wherein the slurry is fed via a syringe pump and the dry powder is fed via a metered disk. The catalyst system typically enters the fluidized bed in the lower 1/3 of its bed height. The Pilot Reactor further comprises a way of weighing the fluidized bed and isolation ports (Product Discharge System) for discharging the powder of composition from the reactor vessel in response to an increase of the fluidized bed weight as polymerization reaction proceeds.

In some embodiments the FB-GPP reactor is a commercial scale reactor such as a UNIPOL™ reactor, which is available from Univation Technologies, LLC, a subsidiary of The Dow Chemical Company, Midland, Michigan, USA. Alternatively, a UNIPOL™ II reactor.

The polymerization conditions used in each polymerization reactor to separately make the LLDPE and HMW HDPE components independently may further include one or more additives such as a chain transfer agent or a promoter or a continuity additive. The chain transfer agents are well known and may be alkyl metal such as diethyl zinc. Promoters are known such as in US 4,988,783 and may include chloroform, $CFCl_3$, trichloroethane, and difluorotetrachloroethane. Prior to reactor start up, a scavenging agent may be used to react with moisture and during reactor transitions a scavenging agent may be used to react with excess activator. Scavenging agents may be a trialkylaluminum. Gas phase polymerizations may be operated free of (not deliberately added) scavenging agents. The polymerization conditions for gas phase polymerization reactor/method may further include an amount (e.g., 0.5 to 200 ppm based on all feeds into reactor) of a static control agent and/or a continuity additive such as aluminum stearate or polyethyleneimine. The static control agent may be added to the FB-GPP reactor to inhibit formation or buildup of static charge therein.

*Metallocene-type catalyst system used to make the LLDPE Component.*

The metallocene-type catalyst used to make the LLDPE component may be any unsubstituted or substituted metallocene effective for making same. The metallocene-type catalyst typically is made from the bis(n-propylcyclopentadienyl)hafnium $X_2$ complex or the bis(1-methyl-3-butylcyclopentadienyl)zirconium $X_2$ complex. The bis(n-propylcyclopentadienyl)hafnium $X_2$ complex or the bis(1-methyl-3-butylcyclopentadienyl)zirconium $X_2$ complex independently may be unsupported when contacted with an activator, which may be the same or different for different catalysts. Alternatively, the bis(n-propylcyclopentadienyl)hafnium $X_2$ complex or the bis(1-methyl-3-butylcyclopentadienyl)zirconium $X_2$ complex may be disposed by spray-drying onto a solid support material prior to being contacted with the activator(s). The solid support material may be uncalcined or calcined prior to being contacted with the catalysts. The solid support material may be a hydrophobic fumed silica (e.g., a fumed silica treated with dimethyldichlorosilane). The unsupported or supported catalyst system may be in the form of a powdery, free-flowing particulate solid.

Support material. The support material for the support-containing embodiments of the metallocene-type catalyst system may be an inorganic oxide material. The terms "support" and "support material" are the same as used herein and refer to a porous inorganic substance or organic substance. In some embodiments, desirable support materials may be inorganic oxides that include Group 2, 3, 4, 5, 13 or 14 oxides, alternatively Group 13 or 14 atoms. Examples of inorganic oxide-type support materials are silica, alumina, titania, zirconia, thoria, and mixtures of any two or more of such inorganic oxides. Examples of such mixtures are silica-chromium, silica-alumina, and silica-titania.

The inorganic oxide support material is porous and has variable surface area, pore volume, and average particle size. In some embodiments, the surface area is from 50 to 1000 square meter per gram ($m^2$/g) and the average particle size is from 20 to 300 micrometers ($\mu$m). Alternatively, the pore volume is from 0.5 to 6.0 cubic centimeters per gram ($cm^3$/g) and the surface area is from 200 to 600 $m^2$/g. Alternatively, the pore volume is from 1.1 to 1.8 $cm^3$/g and the surface area is from 245 to 375 $m^2$/g. Alternatively, the pore volume is from 2.4 to 3.7 $cm^3$/g and the surface area is from 410 to 620 $m^2$/g. Alternatively, the pore volume is from 0.9 to 1.4 $cm^3$/g and the surface area is from 390 to 590 $m^2$/g. Each of the above properties are measured using conventional techniques known in the art.

The support material may comprise silica, alternatively amorphous silica (not quartz), alternatively a high surface area amorphous silica (e.g., from 500 to 1000 $m^2$/g). Such silicas are commercially available from several sources including the Davison Chemical Division of W.R. Grace and Company (e.g., Davison 952 and Davison 955 products), and PQ Corporation (e.g., ES70 product). The silica may be in the form of spherical particles, which are obtained by a spray-drying process. Alternatively, MS3050 product is a silica from PQ Corporation that is not spraydried. As procured, these silicas are not calcined (i.e., not dehydrated). Silica that is calcined prior to purchase may also be used as the support material.

Prior to being contacted with a catalyst (e.g., the bis(n-propylcyclopentadienyl)hafnium $X_2$ complex or the bis(1-methyl-3-butylcyclopentadienyl)zirconium $X_2$ complex), the support material may be pre-treated by heating the support material in air to give a calcined support material. The pre-treating comprises heating the support material at a peak temperature from 350° to 850° C., alternatively from 400° to 800° C., alternatively from 400° to 700° C., alternatively from 500° to 650° C. and for a time period from 2 to 24 hours, alternatively from 4 to 16 hours, alternatively from 8 to 12 hours, alternatively from 1 to 4 hours, thereby making a calcined support material. The support material may be a calcined support material.

The metallocene-type polymerization catalyst (e.g., the bis(n-propylcyclopentadienyl)hafnium $X_2$ complex or the bis(1-methyl-3-butylcyclopentadienyl)zirconium $X_2$ complex) is activated by contacting it with an activator. Any activator may be the same or different as another and independently may be a Lewis acid, a non-coordinating ionic activator, or an ionizing activator, or a Lewis base, an alkylaluminum, or an alkylaluminoxane (alkylalumoxane). The alkylaluminum may be a trialkylaluminum, alkylaluminum halide, or alkylaluminum alkoxide (diethylaluminum ethoxide). The trialkylaluminum may be trimethylaluminum, triethylaluminum ("TEAl"), tripropylaluminum, or tris(2-methylpropyl)aluminum. The alkylaluminum halide may be diethylaluminum chloride. The alkylaluminum alkoxide may be diethylaluminum ethoxide. The alkylaluminoxane may be a methylaluminoxane (MAO), ethylaluminoxane, 2-methylpropyl-aluminoxane, or a modified methylaluminoxane (MMAO). Each alkyl of the alkylaluminum or alkylaluminoxane independently may be a $(C_1-C_7)$alkyl, alternatively a $(C_1-C_6)$alkyl, alternatively a $(C_1-C_4)$alkyl. The molar ratio of activator's metal (Al) to a particular catalyst compound's metal (catalytic metal, e.g., Hf) may be 1000:1 to 0.5:1, alternatively 300:1 to 1:1, alternatively 150:1 to 1:1. Suitable activators are commercially available.

Once the activator and the metallocene-type polymerization catalyst (e.g., the bis(n-propylcyclopentadienyl)haf-

nium $X_2$ complex or the bis(1-methyl-3-butylcyclopentadienyl)zirconium $X_2$ complex) contact each other, the catalyst system is activated, and activator species may be made *in situ.* The activator species may have a different structure or composition than the catalyst and activator from which it is derived and may be a by-product of the activation of the catalyst or may be a derivative of the by-product. The corresponding activator species may be a derivative of the Lewis acid, non-coordinating ionic activator, ionizing activator, Lewis base, alkylaluminum, or alkylaluminoxane, respectively. An example of the derivative of the by-product is a methylaluminoxane species that is formed by devolatilizing during spray-drying of a catalyst system made with methylaluminoxane.

*Chromium-based catalyst system used to make the HMW HDPE component.*

The chromium-based catalyst system (e.g., ACCLAIM™ K-100 advanced chrome catalyst) is unimodal and comprises a reduced chromium oxide catalyst compound and, optionally, one or more of a modifying agent, a reducing agent, an activator, and a support material. The reduced chromium oxide catalyst compound may comprise or be a reaction product be prepared from an activated chromium oxide catalyst compound and a reducing agent, optionally modified by a silyl chromate catalyst compound. The chromium-based catalyst system may be unsupported, that is free of a support material. The support material differs from the activator and the chromium-based catalyst compound in at least one of function (e.g., reactivity), composition (e.g., metal content), and property such as porosity. Alternatively, the chromium-based catalyst system may further comprise a support material for hosting the chromium-based catalyst compound and/or an activator. The chromium-based catalyst compound of the chromium-based catalyst system may be activated by any suitable method, which may or may not employ an activator, and under any suitable activating conditions, as described herein.

The chromium oxide catalyst compound comprises $CrO_g$ or any chromium compound convertible to $CrO_g$ under catalyst activating conditions. Compounds convertible to $CrO_g$ are disclosed in, for example, US 2,825,721; US 3,023,203; US 3,622,251; and US 4,011,382. Examples are chromic acetyl acetonate, chromic halide, chromic nitrate, chromic acetate, chromic sulfate, ammonium chromate, ammonium dichromate, and other soluble, chromium containing salts. Chromium oxide catalyst compounds include Philips-type catalyst compounds, commonly referred to as "inorganic oxide-supported $Cr^{+6}$" catalysts. A Philips-type catalyst compound may be formed by a process that includes impregnating a $Cr^{+3}$ compound into a silica support, followed by calcining the impregnated silica support under oxidizing conditions at 300° to 900° C., alternatively, 400° to 860 °C. to give the Philips-type catalyst compound. Under these conditions, at least some of the $Cr^{+3}$ are converted to $Cr^{+6}$.

The silyl chromate catalyst compound may be a bis(trihydrocarbylsilyl) chromate or a poly(diorganosilyl) chromate. The bis(trihydrocarbylsilyl) chromate may be bis(triethylsilyl) chromate, bis(tributylsilyl) chromate, bis(triisopentylsilyl) chromate, bis(tri-2-ethylhexylsilyl) chromate, bis(tridecylsilyl) chromate, bis(tri(tetradecyl)silyl) chromate, bis(tribenzylsilyl) chromate, bis(triphenylethylsilyl) chromate, bis(triphenylsilyl) chromate, bis(tritolylsilyl) chromate, bis(trixylylsilyl) chromate, bis(trinaphthylsilyl) chromate, bis(triethylphenylsilyl) chromate, or bis(trimethylnaphthylsilyl) chromate. The poly(diorganosilyl) chromate may be polydiphenylsilyl chromate or polydiethylsilyl chromate. In some embodiments, the silyl chromate compound is bis(triphenylsilyl) chromate, bis(tritolylsilyl) chromate, bis(trixylylsilyl) chromate, or bis(trinaphthylsilyl) chromate; alternatively bis(triphenylsilyl) chromate. See US 3,324,101; US 3,704,287; and US 4,100,105.

Supported catalyst compounds. The chromium-based catalyst compound, such as the chromium oxide catalyst compound, the silyl chromate catalyst compound, and/or the reduced chromium oxide catalyst compound, independently may be unsupported, i.e., free of a support material. Alternatively, the chromium-based catalyst compound, such as the chromium oxide catalyst compound, the silyl chromate catalyst compound, or the reduced chromium oxide catalyst compound, may be disposed on a support material. That is, the chromium-based catalyst system may comprise the chromium-based catalyst compound and support material. Typically, the supported reduced chromium oxide catalyst compound is made *in situ* by contacting a preactivated and supported chromium oxide catalyst compound, optionally modified with a silyl chromate catalyst compound, with a reducing agent to give an activated and supported reduced chromium oxide catalyst compound.

Support material. The support material may be an inorganic oxide material. The terms "support" and "support material" are the same as used herein and refer to a porous inorganic substance or organic substance. In some embodiments, desirable support materials may be inorganic oxides that include Group 2, 3, 4, 5, 13 or 14 oxides, alternatively Group 13 or 14 atoms. Examples of inorganic oxide-type support materials are silica, alumina, titania, zirconia, thoria, and mixtures of any two or more of such inorganic oxides. Examples of such mixtures are silica-chromium, silica-alumina, and silica-titania.

The inorganic oxide support material is porous and has variable surface area, pore volume, and average particle size. In some embodiments, the surface area is from 50 to 1000 square meter per gram ($m^2$/g) and the average particle size is from 20 to 300 micrometers ($\mu$m). Alternatively, the pore volume is from 0.5 to 6.0 cubic centimeters per gram ($cm^3$/g) and the surface area is from 200 to 600 $m^2$/g. Alternatively, the pore volume is from 1.1 to 1.8 $cm^3$/g and the

surface area is from 245 to 375 m$^2$/g. Alternatively, the pore volume is from 2.4 to 3.7 cm$^3$/g and the surface area is from 410 to 620 m$^2$/g. Alternatively, the pore volume is from 0.9 to 1.4 cm$^3$/g and the surface area is from 390 to 590 m$^2$/g. Each of the above properties are measured using conventional techniques known in the art.

The support material may comprise silica, alternatively amorphous silica (not quartz), alternatively a high surface area amorphous silica (e.g., from 500 to 1000 m$^2$/g). Such silicas are commercially available from a number of sources including the Davison Chemical Division of W.R. Grace and Company (e.g., Davison 952 and Davison 955 products), and PQ Corporation (e.g., ES70 product). The silica may be in the form of spherical particles, which are obtained by a spray-drying process. Alternatively, MS3050 product is a silica from PQ Corporation that is not spraydried. As procured, all of these silicas are not calcined (i.e., not dehydrated). Silica that is calcined prior to purchase may also be used as the support material.

Supported chromium compounds, such as, for example, supported chromium acetate, are commercially available and may be used as an embodiment of the chromium-based catalyst system. Commercial examples include Davison 957, Davison 957HS, and Davison 957BG products from Davison Chemical Division, and ES370 product from PQ Corp. The supported chromium compound may in the form of spherical particles, which are obtained by a spray-drying process. Alternatively, C35100MS and C35300MS products from PQ Corporation are not spraydried. As procured, all of these silicas are not activated. Supported chromium compounds that are activated prior to purchase may be used as the supported chromium compound.

Prior to being contacted with a chromium oxide catalyst compound, the support material may be pre-treated by heating the support material in air to give a calcined support material. The pre-treating comprises heating the support material at a peak temperature from 350° to 850° C., alternatively from 400° to 800° C., alternatively from 400° to 700° C., alternatively from 500° to 650° C. and for a time period from 2 to 24 hours, alternatively from 4 to 16 hours, alternatively from 8 to 12 hours, alternatively from 1 to 4 hours, thereby making a calcined support material. In some aspects the support material is a calcined support material.

In some embodiments the supported chromium oxide catalyst system further comprises a silyl chromate compound as a modifying agent. As such, the silyl chromate compound may be added to a slurry of the activated (unsupported or supported) chromium oxide catalyst system in a non-polar aprotic solvent to give a slurry of a modified activated supported chromium oxide catalyst system. The solvent may be removed by heating, optionally under reduced pressure, according to the drying process described herein.

Catalyst activation. Any one of the foregoing chromium oxide catalyst compounds or silyl chromate catalyst compound, whether unsupported or supported on an uncalcined or calcined support material, independently may be activated by heating in an oxidative environment (e.g., well-dried air or oxygen) at an activation temperature of from 300° C. or higher with the proviso that the maximum activation temperature is below that at which substantial sintering of the compounds and/or support material would occur. The activating gives an activated (unsupported or supported) chromium oxide catalyst compound and/or an activated (unsupported or supported) silyl chromate catalyst compound. For example to activate the Philips catalyst, a fluidized bed of the supported chromium oxide catalyst compound may be activated by passing a stream of dry air or oxygen therethrough, thereby displacing any water therefrom and converting at least some Cr$^{+3}$ compound to Cr$^{+6}$ compound. The maximum activation temperature may be from 300° to 900° C., alternatively 400° to 850° C., alternatively from 500° to 700° C., alternatively from 550° to 650° C. The activation time period may be from 1 to 48 hours, alternatively from 1 to 36 hours, alternatively from 3 to 24 hours, alternatively from 4 to 6 hours. All other things being equal, the higher the activation temperature used, the shorter the activation period of time to achieve a given level of activation, and vice versa. The resulting activated (unsupported or supported) chromium oxide catalyst system may be in the form of a powdery, free-flowing particulate solid.

The reduced chromium oxide catalyst compound. An activated (unsupported or supported) reduced chromium oxide catalyst compound and system may be prepared from the activated (unsupported or supported) chromium oxide catalyst system. In one embodiment, the activated (unsupported or supported) chromium oxide catalyst system has been prepared from a calcined support material. The activated (unsupported or supported) chromium oxide catalyst system may be unmodified, alternatively may have been modified by the silyl chromate compound according to the modifying method described earlier. The preparing comprises agitating a slurry of the activated (unsupported or supported) chromium oxide catalyst system in a non-polar, aprotic solvent under an inert atmosphere, adding a reducing agent to the agitated slurry over a period of time (addition time), and then allowing the resulting reaction mixture to react under the inert atmosphere for a period of time (reaction time) to make the activated (unsupported or supported) reduced chromium oxide catalyst compound and system, which typically is supported on the support material, as a slurry in the non-polar, aprotic solvent. The inert atmosphere may comprise anhydrous N$_2$ gas, Ar gas, He gas, or a mixture thereof. The inert atmosphere may be at a pressure from 101 to 700 kilopascals (kPa). The temperature of the agitated slurry during the adding step may be from 30° to 80° C., alternatively from 40° to 60° C. The agitation may be performed at a rate less than 70 rotations per minute (rpm) and the addition time may be less than 20 minutes. Alternatively, the agitation rate may be greater than 70 rpm and the addition time may be less than 20 minutes. Alternatively, the agitation rate may be greater than 70 rpm and the addition time may be greater than 20 minutes. The agitation rate may be from 30 to 50 rpm, and the addition time may be from 20 to 80 minutes. The temperature of the reaction mixture during the allowing step may be from 20° to 80° C., alternatively from 20° to 60° C., alternatively from 20° to 40° C. The reaction time period may be from 0.08 to 2 hours.

The reducing agent may be an organoaluminum compound, such as an aluminum alkyl or an alkyl aluminum alkoxide. The alkyl aluminum alkoxide may be of formula $R_2AlOR$, wherein each R is independently an unsubstituted $(C_1-C_{12})$alkyl group, alternatively unsubstituted $(C_1-C_{10})$alkyl group, alternatively unsubstituted $(C_2-C_8)$alkyl group, alternatively unsubstituted $(C_2-C_4)$alkyl group. Examples of the alkyl aluminum alkoxides are diethyl aluminum methoxide, diethyl aluminum ethoxide, diethyl aluminum propoxide, dimethyl aluminum ethoxide, di-isopropyl aluminum ethoxide, di-isobutyl aluminum ethoxide, methyl ethyl aluminum ethoxide and mixtures thereof. In one aspect the reducing agent is diethyl aluminum ethoxide (DEAIE).

The non-polar, aprotic solvent may be an alkane, or a mixture of alkanes, wherein each alkane independently has from 5 to 20 carbon atoms, alternatively from 5 to 12 carbon atoms, alternatively from 5 to 10 carbon atoms. Each alkane independently may be acyclic or cyclic. Each acyclic alkane independently may be straight chain or branched chain. The acyclic alkane may be pentane, 1-methylbutane (isopentane), hexane, 1-methylpentane (isohexane), heptane, 1-methylhexane (isoheptane), octane, nonane, decane, or a mixture of any two or more thereof. The cyclic alkane may be cyclopentane, cyclohexane, cycloheptane, cyclooctane, cyclononane, cyclodecane, methycyclopentane, methylcyclohexane, dimethylcyclopentane, or a mixture of any two or more thereof. The non-polar, aprotic solvent may be a mixture of at least one acyclic alkane and at least one cyclic alkane.

Thereafter, the slurry of the activated (unsupported or supported) reduced chromium oxide catalyst compound and system may be dried to remove the non-polar, aprotic solvent. The drying comprises heating the slurry, optionally under reduced pressure, and in an environment that excludes oxidizing contaminants such as air or oxygen. The drying process transitions the activated (unsupported or supported) reduced chromium oxide catalyst compound and system from a viscous slurry to a partially dried slurry or mud to a free-flowing powder. Helical ribbon agitators may be used in vertical cylindrical blenders to accommodate the varying mixture viscosities and agitation requirements. Drying may be conducted at pressures above, below, or at normal atmospheric pressure as long as contaminants such as oxygen are strictly excluded from the activated (unsupported or supported) reduced chromium oxide catalyst compound and system. Drying temperatures may range from 0° to 100° C., alternatively from 40° to 85° C., alternatively from 55° to 75° C. Drying times may be from 1 to 48 hours, alternatively from 3 to 26 hours, alternatively from 5 to 20 hours. All other things being equal, the higher the drying temperature and/or lower the drying pressure, the shorter the drying time, and vice versa. After drying, the activated (unsupported or supported) reduced chromium oxide catalyst compound and system may be stored under an inert atmosphere until use.

Activator. Also referred to as a co-catalyst, an activator is a compound that enhances the catalytic performance of a catalyst. Aluminum alkyls may be used as activators for reduced chromium oxide catalyst compounds. The aluminum alkyl may also be used to improve the performance of the activated (unsupported or supported) reduced chromium oxide catalyst compound and system. The use of an aluminum alkyl allows for variable control of side branching in the polymer product, and desirable catalyst productivities. The aluminum alkyl may be applied to the reduced chromium oxide catalyst compound directly before the latter is fed into the GPP reactor. Alternatively, the reduced chromium oxide catalyst compound and aluminum alkyl may be fed separately into the GPP reactor, wherein they contact each other *in situ,* which may shorten or eliminate any catalyst induction time. See US 7,504,467 B2.

During the inventive method or use, the chromium-based catalyst system, once activated, may be fed into the GPP reactor as a dry powder, alternatively as a slurry in a non-polar, aprotic solvent, which is as described above.

Chromium oxide catalyst compounds and reduced chromium oxide catalyst compounds and methods of preparation thereof, as well as characteristics of the polymer products formed therefrom, are described in US 6,989,344; US 2011/0010938 A1; US 2016/0297907 A1; or WO 2017/132092 A1.

In some embodiments the chromium-based catalyst system comprises the reduced chromium oxide catalyst system. In some embodiments the reduced chromium oxide catalyst system comprises ACCLAIM™ K-100 catalyst system, ACCLAIM™ K-110 catalyst system, or ACCLAIM™ K-120 catalyst system. The ACCLAIM™ catalyst systems are all available from Univation Technologies, LLC, Houston, Texas, USA.

The ACCLAIM™ K-100, K-110, and K-120 catalyst systems may be prepared on commercial scales as follows. The preparations varying slightly depending on small differences in concentrations of aluminum (DEALE) used thereon in Part (B), described herein. Part (A): activation of supported chromium oxide catalyst system as a powder. Charge a fluidized bed heating vessel with a quantity of a porous silica support containing about 5 wt% chromium acetate (Grade C35300MSF chromium on silica, produced by PQ Corporation), which amounts to about 1 wt% Cr content, having a particle size of about 82 micrometers (μm) and a surface area of about 500 m²/g. Heat up the vessel contents at a rate of about 50° C. per hour under a dry nitrogen stream up to 200° C., and hold at that temperature for about 4 hours. Next, further heat up the vessel contents at a rate of about 50° C per hour under dry nitrogen to 450° C., and hold at that temperature for about 2 hours. Replace the dry nitrogen stream with a stream of dry air, and heat the vessel contents at a rate of about 50° C. per hour to 600° C., and maintain at 600° C. for about 6 hours to give activated chromium oxide catalyst. Cool the activated catalyst dry air stream (at ambient temperature) to about 300° C., replace the dry air stream with a dry nitrogen stream and further cool from 300° C. to room temperature under the dry nitrogen stream (at ambient temperature). The resulting cooled, activated supported chromium oxide catalyst system is a powder. Store the powder under dry nitrogen atmosphere in a mixing vessel until used in Part (B).

Part (B) reduction of activated chromium oxide catalyst system to give ACCLAIM™ K-100, K-110, or K-120 catalyst system. For pilot scale, fit a vertical catalyst blender with a double helical ribbon agitator, and charge with about 0.86 kg of the powder form of the activated supported chromium oxide catalyst of Part (A) under an inert atmosphere. Add dried hexane or isopentane solvent (7.1 L solvent per kg of powder) to adequately suspend the powder and form a slurry. Agitate the slurry, warm to approximately 45° C., and add a 25 wt% solution of DEAIE (Akzo Nobel) in isopentane or hexane above the surface of the catalyst slurry at a rate so that the addition occurs over about a 40 minutes time period to obtain a selected wt% aluminum loading on the powder, wherein the wt% aluminum loading is different depending upon whether ACCLAIM™ K-100, K-110, or K-120 catalyst system is being prepared. Further agitate the resulting at a controlled rate for about 1 hour on a pilot scale or 2 hours on a commercial scale. Then substantially remove the solvent from the resulting reaction mixture by drying at a selected jacket temperature for about 16 to 21 hours. Select the jacket temperature to give a material temperature that lines out near a target of 61°, 64°, 71°, or 81° C. during the later hours of drying, typically 16 hours for pilot scale. As drying time goes on, apply a progressively stronger vacuum to the vessel. The reduced chromium oxide catalyst system comprising ACCLAIM™ K-100, K-110, or K-120 catalyst system is obtained as a dry, free-flowing powder, which is stored in a container under dry nitrogen pressure until used in a polymerization reaction.

*General Definitions.*

Activator. Substance, other than a catalyst or monomer, that increases the rate of a catalyzed reaction without itself being consumed. May contain aluminum and/or boron.

Bimodal. Two, and only two, modalities or modes.

Bimodal in reference to a polymer means a composition consisting essentially of a higher molecular weight component and a lower molecular weight component, which components are characterized by the two peaks in a plot of dW/dLog(MW) on the y-axis versus Log(MW) on the x-axis to give a Gel Permeation Chromatography (GPC) chromatogram, wherein Log(MW) and dW/dLog(MW) are measured by GPC.

Catalyst. A material that enhances rate of a reaction (e.g., the polymerization of ethylene and 1-alkene) and is not completely consumed thereby.

Catalyst system. A combination of a catalyst *per se* and a companion material such as a modifier compound for attenuating reactivity of the catalyst, a support material on which the catalyst is disposed, a carrier material in which the catalyst is disposed, or a combination of any two or more thereof, or a reaction product of a reaction thereof.

Dry. Generally, a moisture content from 0 to less than 5 parts per million based on total parts by weight. Materials fed to the reactor(s) during a polymerization reaction are dry.

Feed. Quantity of reactant or reagent that is added or "fed" into a reactor. In continuous polymerization operation, each feed independently may be continuous or intermittent. The quantities or "feeds" may be measured, e.g., by metering, to control amounts and relative amounts of the various reactants and reagents in the reactor at any given time.

Feed line. A pipe or conduit structure for transporting a feed.

Film. A manufactured article that is restricted in one dimension.

Inert. Generally, not (appreciably) reactive or not (appreciably) interfering therewith in the inventive polymerization reaction. The term "inert" as applied to the purge gas or ethylene feed means a molecular oxygen ($O_2$) content from 0 to less than 5 parts per million based on total parts by weight of the purge gas or ethylene feed.

Metallocene catalyst. Homogeneous or heterogeneous material that contains a cyclopentadienyl ligand-metal complex and enhances olefin polymerization reaction rates. Substantially single site or dual site. Each metal is a transition metal Ti, Zr, or Hf. Each cyclopentadienyl ligand independently is an unsubstituted cyclopentadienyl group or a hydrocarbyl-substituted cyclopentadienyl group (e.g., an unsubstituted or alkyl-substituted indenyl). The metallocene catalyst may have two cyclopentadienyl ligands, and at least one, alternatively both cyclopentadienyl ligands independently is a hydrocarbyl-substituted cyclopentadienyl group. Each hydrocarbyl-substituted cyclopentadienyl group may independently have 1, 2, 3, 4, or 5 hydrocarbyl substituents. Each hydrocarbyl substituent may independently be a $(C_1-C_4)$alkyl. Two or more substituents may be bonded together to form a divalent substituent, which with carbon atoms of the cyclopentadienyl group may form a ring.

Single-site catalyst. An organic ligand-metal complex useful for enhancing rates of polymerization of olefin monomers and having at most two discrete binding sites at the metal available for coordination to an olefin monomer molecule prior to insertion on a propagating polymer chain.

Single-site non-metallocene catalyst. A substantially single-site or dual site, homogeneous or heterogeneous material that is free of an unsubstituted or substituted cyclopentadienyl ligand, but instead has one or more functional ligands such as bisphenyl phenol or carboxamide-containing ligands.

Ziegler-Natta catalysts. Heterogeneous materials that enhance olefin polymerization reaction rates and are prepared by contacting inorganic titanium compounds, such as titanium halides supported on a magnesium chloride support, with an activator.

The relative term "higher" in HMW HDPE component means that the weight-average molecular weight of the HMW HDPE component ($M_{w\text{-}HMW}$) is greater than 250,000 grams per mole.

Density is measured according to ASTM D792-13, *Standard Test Methods for Density and Specific Gravity (Relative Density) of Plastics by Displacement,* Method B (for testing solid plastics in liquids other than water, e.g., in liquid 2-propanol). Report results in units of grams per cubic centimeter ($g/cm^3$).

Gel permeation chromatography (GPC) Test Method: Weight-Average Molecular Weight Test Method: determine $M_w$, number-average molecular weight ($M_n$), and $M_w/M_n$ using chromatograms obtained on a High Temperature Gel Permeation Chromatography instrument (HTGPC, Polymer Laboratories). The HTGPC is equipped with transfer lines, a differential refractive index detector (DRI), and three Polymer Laboratories PLgel 10$\mu$m Mixed-B columns, all contained in an oven maintained at 160° C. Method uses a solvent composed of BHT-treated TCB at nominal flow rate of 1.0 milliliter per minute (mL/min.) and a nominal injection volume of 300 microliters ($\mu$L). Prepare the solvent by dissolving 6 grams of butylated hydroxytoluene (BHT, antioxidant) in 4 liters (L) of reagent grade 1,2,4-trichlorobenzene (TCB), and filtering the resulting solution through a 0.1 micrometer ($\mu$m) Teflon filter to give the solvent. Degas the solvent with an inline degasser before it enters the HTGPC instrument. Calibrate the columns with a series of monodispersed polystyrene (PS) standards. Separately, prepare known concentrations of test polymer dissolved in solvent by heating known amounts thereof in known volumes of solvent at 160° C. with continuous shaking for 2 hours to give solutions. (Measure all quantities gravimetrically.) Target solution concentrations, c, of test polymer of from 0.5 to 2.0 milligrams polymer per milliliter solution (mg/mL), with lower concentrations, c, being used for higher molecular weight polymers. Prior to running each sample, purge the DRI detector. Then increase flow rate in the apparatus to 1.0 mL/min/, and allow the DRI detector to stabilize for 8 hours before injecting the first sample. Calculate $M_w$ and $M_n$ using universal calibration relationships with the column calibrations. Calculate MW at each elution volume with following equation:

$$\log M_X = \frac{\log(K_X / K_{PS})}{a_X + 1} + \frac{a_{PS} + 1}{a_X + 1} \log M_{PS}$$

, where subscript "x" stands for the test sample, subscript "PS" stands for PS standards, $a_{PS} = 0.67$, $K_{PS} = 0.000175$, and $a_x$ and $K_x$ are obtained from published literature. For polyethylenes, $a_x/K_x = 0.695/0.000579$. For polypropylenes $a_x/K_x = 0.705/0.0002288$. At each point in the resulting chromatogram, calculate concentration, c, from a baseline-subtracted DRI signal, $I_{DRI}$, using the following equation: $c = K_{DRI}$ $I_{DRI}/(dn/dc)$, wherein $K_{DRI}$ is a constant determined by calibrating the DRI, / indicates division, and dn/dc is the refractive index increment for the polymer. For polyethylene, dn/dc = 0.109. Calculate mass recovery of polymer from the ratio of the integrated area of the chromatogram of concentration chromatography over elution volume and the injection mass which is equal to the pre-determined concentration multiplied by injection loop volume. Report all molecular weights in grams per mole (g/mol) unless otherwise noted. Further details regarding methods of determining Mw, Mn, MWD are described in US 2006/0173123 page 24-25, paragraphs [0334] to [0341]. Plot of dW/dLog(MW) on the y-axis versus Log(MW) on the x-axis to give a GPC chromatogram, wherein Log(MW) and dW/dLog(MW) are as defined above.

High Load Melt Index (HLMI) $I_{21}$ Test Method: use ASTM D1238-13, *Standard Test Method for Melt Flow Rates of Thermoplastics by Extrusion Platometer,* using conditions of 190° C./21.6 kilograms (kg). Report results in units of grams eluted per 10 minutes (g/10 min.).

Melt Index ("$I_2$") Test Method: for ethylene-based (co)polymer is measured according to ASTM D1238-13, using conditions of 190° C./2.16 kg, formerly known as "Condition E".

Melt Flow Ratio MFR2: ("$I_{21}/I_2$") Test Method: calculated by dividing the value from the HLMI $I_{21}$ Test Method by the value from the Melt Index $I_2$ Test Method.

Highlight Film Test Method: measured applied stretch force to achieve 200% stretch of a 0.0127 mm (0.5 mil) cast test film prepared according to the Cast Film Preparation Method. Perform this highlight stretch procedure on a Highlight Industries Synergy 3HP machine. This test is especially useful for measuring stretch performance of stretch wrap films for wrapping pallets of goods in need thereof. Utilize the hydro-stretch powered pre-stretch system of this machine, the percentage of stretch occurring between two rollers can be easily adjusted to any specific level, such as 200%. The greater the stretch force in Newtons (N) relative to that of a control test film, the better the performance of the cast test film.

200 percent stretch means pulling a film until it is stretched 200% (i.e., until the stretched film is three times (3 x) as long as the unstretched film.

Tensile Test Method: Measured on a blown test film having a thickness of 0.051 mm (2 mils) prepared according to the Blown Film Preparation Method. The greater the break stress in MPa and/or the strain/elongation at break in % relative to those of a control test film, the better the performance of the blown test film.

Blown Film Preparation Method: prepared 0.051 millimeter (mm, 2 mils gauge) thick films by film blowing. Configured a blown-film-line machine for making polyethylene films with a feed hopper in fluid communication with an extruder in heating communication with a heating device heated to a temperature of 430° C. The extruder is in fluid communication with a die having a fixed die gap of 1.778 millimeter (70.00 mils), a blow-up ratio of 2.5:1. The Frost Line Height (FLH) is 81 ± 5.1 centimeters (32 ± 2 inches) from the die. The machine used a feed rate of blend composition, and production rate of film, of 89.6 kg (197.6 pounds) per hour at a melt temperature of 202° ± 1° C. and an extruder rate of 28.5 revolutions per minute (rpm).

Cast Film Preparation Method: films having a thickness of 0.0127 millimeter (mm, 0.5 mil gauge) were prepared by film casting. In a cast film extrusion process, extruded a thin film through a slit onto a chilled, highly polished rotating roll, where it is quenched from one side. The rotation speed of the roller controls the draw ratio and final film thickness. Then sent the film to a second roller for cooling on the other side. Finally passed the cooled film through a system of rollers and wound it onto a roll. Fabricated films of Inventive Examples IE3, IE4 and IE5 on a 5-layer Egan Davis Standard coextrusion cast film line. The cast line has three 6.35 cm (2.5 inch) and two 5.08 cm (2.0 inch) 30:1 LID Egan Davis Standard MAC extruders which are air cooled. All extruders have moderate work DSB (Davis Standard Barrier) type screws. A CMR 2000 microprocessor monitors and controls operations. The extrusion process is monitored by pressure transducers located before and after the breaker plate as well as four heater zones on each barrel, one each at the adapter and the block and two zones on the die. Both the primary and secondary chill roll has chilled water circulating through it to provide quenching. There is an NDC Beta gauge sensor for gauge thickness and automatic gauge control if needed. Rate is measured by five Barron weigh hoppers with load cells on each hopper for gravimetric control. Samples are finished on the two-position single turret Horizon winder on 7.62 cm (3.0 inch) inner diameter (I.D.) cores with center wind automatic roll changeover and slitter station. The maximum throughput rate for the line is 270 kg (600 pounds) per hour and maximum line speed is 270 meters (m; 900 feet) per minute. Films were fabricated according to the following conditions: melt temperature is 280° to 310° C. (540° to 585° Fahrenheit); line speed 140 to 180 m/minute (450 to 600 feet/minute); throughput rate: 110 to 160 kg/hour (250 to 350 pounds per hour); chill roll temperature 21° C. (70° F.); cast roll temperature 21° C. (70° F.); melt curtain 8.9 cm (3.5 inches); vacuum box: OFF; and die gap 0.508 mm (20 mils).

EXAMPLES

Polyethylene Blend Preparation Method: The polyolefin blend comprises a uniform dispersion of the LLDPE component and the HMW HDPE component. The term "uniform dispersion" refers to these components as being mixed or blended together to an even extent, such that the resulting material is of a constant composition of the LLDPE and HMW HDPE components throughout. The uniform dispersion may be a liquid (melt) or a solid. The uniform dispersion may further contain an *in situ* reaction product (LLDPE)-(HMW HDPE), which is a product of a reaction of some of the LLDPE component with some of the HMW HDPE component so as to form the reaction product.

HMW HDPE Component 1: a higher molecular weight high-density poly(ethylene-co-1-hexene) copolymer resin having a flow index ($I_{21}$) of 8.2 g/10 min. and density of 0.949 g/cm$^3$ and made with chromium-based catalyst system ACCLAIM™ K-100 prepared as described earlier and commercially available from Univation Technologies, LLC.

HMW HDPE Component 2: a higher molecular weight high-density poly(ethylene-*co*-1-hexene) copolymer resin having a flow index ($I_{21}$) of 11 g/10 min. and density of 0.948 g/cm$^3$. The HMW HDPE Component 2 is available as DGDP-6097 from The Dow Chemical Company.

LLDPE Component 1: a linear low-density polyethylene homopolymer resin having a melt index ($I_2$) of 1.0 g/10 min. and density of 0.918 g/cm$^3$ and made with a metallocene-type catalyst system made by contacting bis(1-methyl-3-butylcyclopentadienyl)zirconium $X_2$ complex, wherein each X independently is Cl or methyl, with an activator comprising a methylaluminoxane (MAO). The catalyst system is commercially available as XCAT™ HP-100 from Univation Technologies, LLC.

LLDPE Component 2: a linear low-density polyethylene homopolymer resin having a melt index ($I_2$) of 1.0 g/10 min. and density of 0.918 g/cm$^3$ and made with a metallocene-type catalyst system made by contacting bis(n-propylcyclopentadienyl)hafnium $X_2$ complex, wherein each X independently is Cl or methyl, with an activator comprising a methylaluminoxane (MAO). The catalyst system is commercially available as XCAT™ VP-100 from Univation Technologies, LLC, a wholly-owned subsidiary of The Dow Chemical Company.

LLDPE Component 3: a linear low-density polyethylene homopolymer resin having a melt index ($I_2$) of 3.0 g/10 min. and density of 0.917 g/cm$^3$. The LLDPE Component 3 is available as GM-8460 from The Dow Chemical Company.

LLDPE Component 4: a linear low-density polyethylene homopolymer resin having a melt index ($I_2$) of 1.0 g/10 min. and density of 0.918 g/cm$^3$. The LLDPE Component 4 is available as EXCEED-1018 from ExxonMobil Corp.

LLDPE Component 5: a linear low-density polyethylene homopolymer resin having a melt index ($I_2$) of 1.0 g/10 min. and density of 0.920 g/cm$^3$. The LLDPE Component 5 is available as DOWLEX-2045 from The Dow Chemical Company.

Comparative Examples 1 to 4 (CE1 to CE4): prepared polyethylene blends according to the Polyethylene Blend Preparation Method, the polyethylene blends had from 5 to 50 wt% of HMW HDPE Component 1 and from 95 to 50 wt% of the LLDPE Component 1.

Comparative Examples 5 to 8 (CE5 to CE8): prepared polyethylene blends according to the Polyethylene Blend Preparation Method, the polyethylene blends had from 5 to 50 wt% of HMW HDPE Component 1 and from 95 to 50 wt% of the LLDPE Component 2.

Inventive Example 1 (IE1): prepared polyethylene blend according to the Polyethylene Blend Preparation Method, the polyethylene blend had 2 wt% of HMW HDPE Component 1 and 98 wt% of the LLDPE Component 1.

Inventive Example 2 (IE2): prepared polyethylene blend according to the Polyethylene Blend Preparation Method, the polyethylene blend had 2 wt% of HMW HDPE Component 1 and 98 wt% of the LLDPE Component 2.

Table 1: Compositions of CE1-CE8 and IE1-IE2.

| Example | HMW HDPE Component 1 (wt%) | LLDPE Component 1 (wt%) | LLDPE Component 2 (wt%) |
|---|---|---|---|
| CE1 | 5 | 95 | 0 |
| CE2 | 10 | 90 | 0 |
| CE3 | 20 | 80 | 0 |
| CE4 | 50 | 50 | 0 |
| IE1 | 2 | 98 | 0 |
| CE5 | 5 | 0 | 95 |
| CE6 | 10 | 0 | 90 |
| CE7 | 20 | 0 | 80 |
| CE8 | 50 | 0 | 50 |
| IE2 | 2 | 0 | 98 |

Comparative Examples 1F to 4F (CE1F to CE4F): prepared blown test films of the polyethylene blends of CE1 to CE4, respectively, using the Blown Film Preparation Method. Measured stretch break properties of the blown test films according to the Tensile Test Method.

Comparative Examples 5F to 8F (CE5F to CE8F): prepared blown films of the polyethylene blends of CE5 to CE8, respectively, using the Blown Film Preparation Method. Measured stretch break properties of the blown test films according to the Tensile Test Method.

Inventive Example 1 (IE1F): prepared a blown film of the polyethylene blend of IE1 using the Blown Film Preparation Method. Measured stretch break properties of the blown test film according to the Tensile Test Method.

Inventive Example 2 (IE2F): prepared a blown film of the polyethylene blend of IE2 using the Blown Film Preparation Method. Measured stretch break properties of the blown test film according to the Tensile Test Method.

Table 2: Tensile properties of blown test films of CE1F to CE8F and IE1F to IE2F.

| Example | Break Stress - CD | | Break Stress - MD | | Elongation at Break - CD | | Elongation at Break - MD | |
|---|---|---|---|---|---|---|---|---|
| | (MPa) | (% Change) | (MPa) | (% Change) | (%) | (% Change) | (%) | (% Change) |
| Control 1 (100% LLDPE 1) | 35.50 | 100.0 | 37.58 | 100.0 | 571 | 100.0 | 555 | 100.0 |
| CE1F | 34.06 | 95.9 | 42.06 | 111.9 | 559 | 97.9 | 556 | 100.2 |
| CE2F | 31.86 | 89.7 | 42.78 | 113.8 | 564 | 98.8 | 560 | 100.9 |
| CE3F | 35.07 | 98.8 | 35.53 | 94.5 | 589 | 103.2 | 493 | 88.8 |
| CE4F | 38.11 | 107.4 | 35.91 | 95.6 | 639 | 111.9 | 437 | 78.7 |
| IE1F | 37.24 | 104.9 | 47.58 | 126.6 | 582 | 101.9 | 599 | 107.9 |

(continued)

| Example | Break Stress - CD | | Break Stress - MD | | Elongation at Break - CD | | Elongation at Break - MD | |
|---|---|---|---|---|---|---|---|---|
| | (MPa) | (% Change) | (MPa) | (% Change) | (%) | (% Change) | (%) | (% Change) |
| Control 2 (100% LLDPE 2) | 29.48 | 100.0 | 34.98 | 100.0 | 553 | 100.0 | 524 | 100.0 |
| CE5F | 30.99 | 105.1 | 35.89 | 102.6 | 558 | 100.9 | 523 | 99.8 |
| CE6F | 28.84 | 97.8 | 35.37 | 101.1 | 556 | 100.5 | 516 | 98.5 |
| CE7F | 34.43 | 116.8 | 33.79 | 96.6 | 605 | 109.4 | 479 | 91.4 |
| CE8F | 27.28 | 92.5 | 33.12 | 94.7 | 611 | 110.5 | 394 | 75.2 |
| IE2F | 33.78 | 114.6 | 36.51 | 104.4 | 574 | 103.8 | 534 | 101.9 |

As shown in Table 2, the inventive sample IE1F showed highest MD break stress i.e. about 27% higher, and highest MD elongation at break i.e. about 8% higher, over the Control 1 in comparison to the CE1F-CE4F. Similarly the inventive sample IE2F showed highest MD break stress i.e. about 4.4 % higher, and highest MD elongation at break i.e. about 2% higher, over the Control 2 in comparison to the CE5F-CE8F. Higher MD break stress and MD elongation at break are the desirable features in stretch wrap films.

Inventive Example 3 (IE3): prepared polyethylene blend according to the Polyethylene Blend Preparation Method, the polyethylene blend had 2 wt% of HMW HDPE Component 2 and 98 wt% of the LLDPE Component 3.Inventive Example 4 (IE4): prepared polyethylene blend according to the Polyethylene Blend Preparation Method, the polyethylene blend had 2 wt% of HMW HDPE Component 2 and 98 wt% of the LLDPE Component 4.

Inventive Example 5 (IE5): prepared polyethylene blend according to the Polyethylene Blend Preparation Method, the polyethylene blend had 2 wt% of HMW HDPE Component 1 and 98 wt% of the LLDPE Component 5.

Inventive Example 3F (IE3F): prepared a cast test film of the polyethylene blend of IE3 according to the Cast Film Preparation Method. Measured applied stretch force to achieve 200% stretch of the cast test film according to the Highlight Film Test Method.

Inventive Example 4F (IE4F): prepared a cast test film of the polyethylene blend of IE4 according to the Cast Film Preparation Method. Measured applied stretch force to achieve 200% stretch of the cast test film according to the Highlight Film Test Method.

Inventive Example 5F (IE5F): prepared a cast test film of the polyethylene blend of IE5 according to the Cast Film Preparation Method. Measured applied stretch force to achieve 200% stretch of the cast test film according to the Highlight Film Test Method.

Table 3: Stretch break properties of cast test films of IE3F to IE5F.

| Example | Applied Stretch Force (N) at 200% Stretch | Stretch Force relative to Control (%) | Standard Deviation (N) |
|---|---|---|---|
| Control 3 (100% LLDPE 3) | 220 | 100 | 0.3 |
| IE3F | 240 | 112.2 | 0.3 |
| Control 4 (100% LLDPE 4) | 260 | 100 | 0.3 |
| IE4F | 280 | 106.8 | 0.2 |
| Control 5 (100% LLDPE 5) | 250 | 100 | 0.1 |
| IE5F | 300 | 119.3 | 5.7 |

As shown in Table 3, the stretch force at 200% stretch increases in IE3F, IE4F and IE5F over the respective control samples. Higher stretch force indicates improved holding of the objects on pallets when wrapped by the stretch wrap film.

As shown by the data in Tables 2 and 3, the polyethylene blend has at least one improved (increased) stretch property and is particularly useful in stretch wrap film applications.

**Claims**

1. A polyethylene blend consisting essentially of from 98.4 to 97.6 weight percent (wt%) of the linear low-density polyethylene (LLDPE) component and from 1.6 to 2.4 wt% of the higher molecular weight high-density polyethylene polymer (HMW HDPE) component, based on the combined weight of the LLDPE component and the HMW HDPE component.

2. The polyethylene blend of claim 1 having at least one improved stretch property **characterized by** at least one of features (a) to (d): (a) a break stress in the cross-direction (CD) of greater than 36.0 megapascals (MPa); (b) a strain or elongation at break in the cross-direction (CD) of greater than 571 percent (%); (c) a break stress in the machine direction (MD) of greater than 44.0 MPa; and (d) a strain at break in the machine direction (MD) of greater than 531%.

3. The polyethylene blend of claim 1 or 2 wherein the LLDPE component is **characterized by** any one of features (i-a) to (iii-a): (i-a) being a poly(ethylene-co-1-alkene) copolymer; (ii-a) having a melt index ($I_2$) from 0.5 to 4.5 gram per 10 minutes (g/10 min.), measured according to ASTM D1238-13 (190° C., 2.16 kg); and (iii-a) having a density from 0.915 to 0.927 gram per cubic centimeter ($g/cm^3$), measured according to ASTM D792-13 (Method B, 2-propanol; and wherein the HMW HDPE component is **characterized by** any one of features (i-b) to (iii-b): (i-b) being a poly(ethylene-co-1-alkene) copolymer; (ii-b) having a flow index ($I_{21}$) from 5 to 14 grams per 10 minutes (g/10 min.), measured according to ASTM D1238-13 (190° C., 21.6 kg); and (iii-b) having a density from 0.944 to 0.956 $g/cm^3$, measured according to ASTM D792-13 (Method B, 2-propanol).

4. The polyethylene blend of any one of claims 1 to 3 wherein the LLDPE component is 98 wt% of the total weight of the LLDPE and HMW HDPE components and either the LLDPE component is a poly(ethylene-co-1-hexene) copolymer having a melt index ($I_2$) of 1.0 g/10 min. and a density of 0.918 $g/cm^3$ or 0.920 $g/cm^3$ or the LLDPE component is a poly(ethylene-co-1-hexene) copolymer having a melt index ($I_2$) of 3.0 g/10 min. and a density of 0.917 $g/cm^3$; and wherein the HMW HDPE component is 2 wt% of the total weight of the LLDPE and HMW HDPE components and either the HMW HDPE component is a poly(ethylene-co-1-hexene) copolymer having a flow index ($I_{21}$) of 8.2 g/10 min. and a density of 0.949 $g/cm^3$ or the HMW HDPE component is a poly(ethylene-co-1-hexene) copolymer having a flow index ($I_{21}$) of 11 g/10 min. and a density of 0.948 $g/cm^3$.

5. The polyethylene blend of any one of claims 1 to 4 wherein the LLDPE component is made by a metallocene-type catalyst system made by contacting bis(n-propylcyclopentadienyl)hafnium $X_2$ complex or bis(1-methyl-3-butylcyclopentadienyl)zirconium $X_2$ complex, wherein each X independently is Cl, methyl, 2,2-dimethylpropyl, $-CH_2Si(CH_3)_3$, or benzyl, with an activator; and wherein the HMW HDPE component is made by a reduced chromium oxide catalyst system.

6. A method of making the polyethylene blend of any one of claims 1 to 5, the method comprising separately polymerizing ethylene and, optionally, a 1-alkene with a metallocene-type catalyst system made by contacting bis(n-propylcyclopentadienyl)hafnium $X_2$ complex or bis(1-methyl-3-butylcyclopentadienyl)zirconium $X_2$ complex, wherein each X independently is Cl, methyl, 2,2-dimethylpropyl, $-CH_2Si(CH_3)_3$, or benzyl, with an activator to give the LLDPE component; separately polymerizing ethylene with a reduced chromium oxide catalyst system to give the HMW HDPE component; and melt-blending the LLDPE and HMW HDPE components together to yield the polyethylene blend.

7. A formulation comprising the polyethylene blend of any one of claims 1 to 5 and at least one additive that is different than the HMW HDPE component and LLDPE component.

8. A manufactured article comprising the polyethylene blend of any one of claims 1 to 5 or the formulation of claim 7.

9. A stretch wrap film comprising the polyethylene blend of any one of claims 1 to 5 or the formulation of claim 7.

10. A method of wrapping an object in need of being wrapped, the method comprising applying a stretching force to the stretch wrap film of claim 9 to give a stretched film, tightly wrapping the object with the stretched film, and releasing the stretching force, thereby allowing elasticity of the stretched film to at least recover to yield a package comprising the object and a film tightly wrapped therearound.

**Patentansprüche**

1. Polyethylenmischung, die im Wesentlichen aus von zu 98,4 bis 97,6 Gewichtsprozent (Gew.-%) der linearen Hochdruckpolyethylenkomponente (LLDPE-Komponente) und von zu 1,6 bis 2,4 Gew.-% der Niederdruckpolyethylenpolymerkomponente eines höheren Molekulargewichts (HMW-HDPE-Komponente) besteht, bezogen auf das kombinierte Gewicht der LLDPE-Komponente und der HMW-HDPE-Komponente.

2. Polyethylenmischung nach Anspruch 1, die mindestens eine verbesserte Streckeigenschaft aufweist, **gekennzeichnet durch** mindestens eines der Merkmale (a) bis (d): (a) eine Bruchspannung in der Querrichtung (CD) von mehr als 36,0 Megapascal (MPa); (b) eine Reiß- oder Bruchdehnung in der Querrichtung (CD) von mehr als 571 Prozent (%); (c) eine Bruchspannung in der Maschinenrichtung (MD) von mehr als 44,0 MP; und (d) eine Bruchdehnung in der Maschinenrichtung (MD) von mehr als 531 %.

3. Polyethylenmischung nach Anspruch 1 oder 2, wobei die LLDPE-Komponente **gekennzeichnet ist durch** ein Beliebiges der Merkmale (i-a) bis (iii-a): (i-a) dass sie ein Poly(ethylen-*co*-1-alken)-Copolymer ist; (ii-a) dass sie einen Schmelzindex ($I_2$) von 0,5 bis 4,5 Gramm pro 10 Minuten (g/10 min.), gemessen gemäß ASTM D 1238-13 (190 °C, 2,16 kg), aufweist; und (iii-a) dass sie eine Dichte von 0,915 bis 0,927 Gramm pro Kubikzentimeter (g/cm$^3$), gemessen gemäß ASTM D792-13 (Verfahren B, 2-Propanol, aufweist; und wobei die HMW-HDPE-Komponente **gekennzeichnet ist durch** ein Beliebiges der Merkmale (i-b) bis (iii-b): (i-b) dass sie ein Poly(ethylen-co-I-alken)-Copolymer ist; (ii-b) dass sie einen Fließindex ($I_{21}$) von 5 bis 14 Gramm pro 10 Minuten (g/10 min.), gemessen gemäß ASTM D 1238-13 (190 °C, 21,6 kg), aufweist; und (iii-B) dass sie eine Dichte von 0,944 bis 0,956 g/cm$^3$, gemessen gemäß ASTM D 792-13 (Verfahren B, 2-Propanol), aufweist.

4. Polyethylenmischung nach einem der Ansprüche 1 bis 3, wobei die LLDPE-Komponente 98 Gew.-% des Gesamtgewichts der LLDPE-und HMW-HDPE-Komponenten beträgt und entweder die LLDPE-Komponente ein Poly(ethylen-co-1-hexen)-Copolymer, das einen Schmelzindex ($I_2$) von 1,0 g/10 min. und eine Dichte von 0,918 g/cm$^3$ oder 0,920 g/cm$^3$ aufweist, ist oder die LLDPE-Komponente ein Poly(ethylen-co-1-hexen)-Copolymer, das einen Schmelzindex ($I_2$) von 3,0 g/10 min und eine Dichte von 0,917 g/cm$^3$ aufweist, ist; und wobei die HMW-HDPE Komponente 2 Gew.-% des Gesamtgewichts der LLDPE- und HMW-HDPE-Komponenten beträgt und entweder die HMW-HDPE-Komponente ein Poly(ethylen-*co*-1-hexen)-Copolymer, das einen Fließindex ($I_{21}$) von 8,2 g/10 min und eine Dichte von 0,949 g/cm$^3$ aufweist, ist oder die HMW-HDPE-Komponente ein Poly(ethylen-*co*-I-hexen)-Copolymer, das einen Fließindex ($I_{21}$) von 11 g/10 min. und eine Dichte von 0,948 g/cm$^3$ aufweist, ist.

5. Polyethylenmischung nach einem der Ansprüche 1 bis 4, wobei die LLDPE-Komponente durch ein Katalysatorsystem einer Metallocenart hergestellt wird, das durch Inberührungbringen eines Bis(n-propylcyclopentadienyl)hafnium-$X_2$-Komplexes oder eines Bis(1-methyl-3-butylcyclopentadienyl)zirconium-$X_2$-Komplexes hergestellt wird, wobei jedes X unabhängig CI, Methyl, 2,2-Dimethylpropyl, -CH$_2$Si(CH$_3$)$_3$ oder Benzyl ist, mit einem Aktivator; und wobei die HMW-HDPE-Komponente durch ein reduziertes Chromoxidkatalysatorsystem hergestellt wird.

6. Verfahren zum Herstellen der Polyethylenmischung nach einem der Ansprüche 1 bis 5, das Verfahren umfassend ein separates Polymerisieren von Ethylen und, optional, einem 1-Alken mit einem Katalysatorsystem der Metallocenart, das durch Inberührungbringen des Bis(n-propylcyclopentadienyl)hafnium-$X_2$-Komplexes oder des Bis(1-methyl-3-butylcyclopentadienyl)zirconium-$X_2$-Komplexes hergestellt wird, wobei jedes X unabhängig CI, Methyl, 2,2-Dimethylpropyl, -CH$_2$Si(CH$_3$)$_3$ oder Benzyl ist, mit einem Aktivator, um die LLDPE-Komponente zu ergeben; separates Polymerisieren von Ethylen mit einem reduzierten Chromoxidkatalysatorsystem, um die HMW-HDPE-Komponente zu ergeben; und Schmelzmischen der LLDPE-und HMW-HDPE-Komponenten zusammen, um die Polyethylenmischung hervorzubringen.

7. Formulierung, umfassend die Polyethylenmischung nach einem der Ansprüche 1 bis 5 und mindestens ein Additiv, das sich von der HMW-HDPE-Komponente und LLDPE-Komponente unterscheidet.

8. Gefertigtes Erzeugnis, umfassend die Polyethylenmischung nach einem der Ansprüche 1 bis 5 oder die Formulierung nach Anspruch 7.

9. Streckverpackungsfolie, umfassend die Polyethylenmischung nach einem der Ansprüche 1 bis 5 oder die Formulierung nach Anspruch 7.

10. Verfahren zum Verpacken eines Objekts, das verpackungsbedürftig ist, das Verfahren umfassend ein Aufbringen einer Streckkraft auf die Streckverpackungsfolie nach Anspruch 9, um eine gestreckte Folie zu ergeben, straffes Verpacken des Objekts mit der gestreckten Folie und Verringern der Streckkraft, wobei dadurch ermöglicht wird, dass eine Elastizität der gestreckten Folie mindestens zurückgewonnen wird, um eine Packung, umfassend das Objekt und eine Folie, die straff darum gepackt ist, hervorzubringen.

**Revendications**

1. Mélange de polyéthylène constitué sensiblement de 98,4 à 97,6 pour cent en poids (% en poids) du composant polyéthylène basse densité linéaire (LLDPE) et de 1,6 à 2,4 % en poids du composant polymère de polyéthylène haute densité de masse moléculaire plus élevée (HMW HDPE), sur la base du poids combiné du composant LLDPE et du composant HMW HDPE.

2. Mélange de polyéthylène selon la revendication 1 ayant au moins une propriété d'étirement améliorée **caractérisé par** au moins l'une des caractéristiques (a) à (d) : (a) une contrainte à la rupture dans la direction transversale (CD) supérieure à 36,0 mégapascals (MPa) ; (b) une déformation ou un allongement à la rupture dans la direction transversale (CD) supérieur à 571 pour cent (%) ; (c) une contrainte à la rupture dans la direction machine (MD) supérieure à 44,0 MPa ; et (d) une déformation à la rupture dans la direction machine (MD) supérieure à 531 %.

3. Mélange de polyéthylène selon la revendication 1 ou 2 dans lequel le composant LLDPE est **caractérisé par** l'une quelconque des caractéristiques (i-a) à (iii-a) : (i-a) étant un copolymère poly(éthylène-co-1-alcène) ; (ii-a) ayant un indice de fusion ($I_2$) allant de 0,5 à 4,5 grammes par 10 minutes (g/10 min), mesuré selon ASTM D1238-13 (190 °C, 2,16 kg) ; et (iii-a) ayant une densité allant de 0,915 à 0,927 gramme par centimètre cube (g/cm$^3$), mesurée selon ASTM D792-13 (Procédé B, 2-propanol ; et dans lequel le composant HMW HDPE est **caractérisé par** l'une quelconque des caractéristiques (i-b) à (iii-b) : (i-b) étant un copolymère poly(éthylène-co-1-alcène) ; (ii-b) ayant un indice d'écoulement ($I_{21}$) allant de 5 à 14 grammes par 10 minutes (g/10 min), mesuré selon ASTM D1238-13 (190 °C, 21,6 kg) ; et (iii-b) ayant une densité allant de 0,944 à 0,956 g/cm$^3$, mesurée selon ASTM D792-13 (Procédé B, 2-propanol).

4. Mélange de polyéthylène selon l'une quelconque des revendications 1 à 3 dans lequel le composant LLDPE représente 98 % en poids du poids total des composants LLDPE et HMW HDPE et soit le composant LLDPE est un copolymère poly(éthylène-co-1-hexène) ayant un indice de fusion ($I_2$) de 1,0 g/10 min et une densité de 0,918 g/cm$^3$ ou 0,920 g/cm$^3$ soit le composant LLDPE est un copolymère poly(éthylène-co-1-hexène) ayant un indice de fusion ($I_2$) de 3,0 g/10 min et une densité de 0,917 g/cm$^3$ ; et dans lequel le composant HMW HDPE représente 2 % en poids du poids total des composants LLDPE et HMW HDPE et soit le composant HMW HDPE est un copolymère poly(éthylène-co-1-hexène) ayant un indice d'écoulement ($I_{21}$) de 8,2 g/10 min et une densité de 0,949 g/cm$^3$ soit le composant HMW HDPE est un copolymère poly(éthylène-*co*-1-hexène) ayant un indice d'écoulement ($I_{21}$) de 11 g/10 min et une densité de 0,948 g/cm$^3$.

5. Mélange de polyéthylène selon l'une quelconque des revendications 1 à 4 dans lequel le composant LLDPE est fabriqué par un système de catalyseur de type métallocène fabriqué par mise en contact d'un complexe bis(n-propylcyclopentadiényl)hafnium X$_2$ ou d'un complexe bis(1-méthyl-3-butylcyclopentadiényl)zirconium X$_2$, dans lequel chaque X est indépendamment Cl, méthyle, 2,2-diméthylpropyle, -CH$_2$Si(CH$_3$)$_3$, ou benzyle, avec un activateur ; et dans lequel le composant HMW HDPE est fabriqué par un système de catalyseur à oxyde de chrome réduit.

6. Procédé de fabrication du mélange de polyéthylène selon l'une quelconque des revendications 1 à 5, le procédé comprenant la polymérisation séparée d'éthylène et, facultativement, d'un 1-alcène avec un système de catalyseur de type métallocène fabriqué par mise en contact d'un complexe bis(n-propylcyclopentadiényl)hafnium X$_2$ ou d'un complexe bis(1-méthyl-3-butylcyclopentadiényl)zirconium X$_2$, dans lequel chaque X est indépendamment Cl, méthyle, 2,2-diméthylpropyle, -CH$_2$Si(CH$_3$)$_3$, ou benzyle, avec un activateur pour fournir le composant LLDPE ; la polymérisation séparée d'éthylène avec un système de catalyseur à oxyde de chrome réduit pour fournir le composant HMW HDPE ; et le mélangeage en fusion conjoint des composants LLDPE et HMW HDPE pour produire le mélange de polyéthylène.

**7.** Formulation comprenant le mélange de polyéthylène selon l'une quelconque des revendications 1 à 5 et au moins un additif qui est différent du composant HMW HDPE et du composant LLDPE.

**8.** Article manufacturé comprenant le mélange de polyéthylène selon l'une quelconque des revendications 1 à 5 ou la formulation selon la revendication 7.

**9.** Film d'enveloppement étirable comprenant le mélange de polyéthylène selon l'une quelconque des revendications 1 à 5 ou la formulation selon la revendication 7.

**10.** Procédé d'enveloppement d'un objet devant être enveloppé, le procédé comprenant l'application d'une force d'étirement au film d'enveloppement étirable selon la revendication 9 pour fournir un film étiré, l'enveloppement serré de l'objet avec le film étiré, et le relâchement de la force d'étirement, ce qui permet à l'élasticité du film étiré d'au moins se rétablir pour produire un emballage comprenant l'objet et un film étroitement enveloppé autour de celui-ci.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20030113496 A1
- US 20030139530 A1
- US 20070260016 A1
- US 20080038533 A1
- US 20120028017 A1
- US 6355733 B1
- US 6649698 B1
- US 4453399 A
- US 4588790 A
- US 4994534 A
- US 5352749 A
- US 5462999 A
- US 6489408 B
- US 3709853 A
- US 4003712 A
- US 4011382 A
- US 4302566 A
- US 4543399 A
- US 4882400 A
- US 5541270 A
- EP 0802202 A
- BE 839380
- US 5627242 A
- US 5665818 A
- US 5677375 A
- EP 0794200 A
- EP 0649992 B1
- EP 634421 B
- US 4988783 A
- US 2825721 A
- US 3023203 A
- US 3622251 A
- US 3324101 A
- US 3704287 A
- US 4100105 A
- US 7504467 B2
- US 6989344 B
- US 20110010938 A1
- US 20160297907 A1
- WO 2017132092 A1
- US 20060173123 A